# EUROPÄISCHE PATENTANMELDUNG

(11) **EP 2 068 055 A1**
(43) Veröffentlichungstag der Anmeldung: **10.06.2009**
(21) Anmeldenummer: 07023777.1
(22) Anmeldetag: 07.12.2007
(51) Int. Cl.: F16K 31/04

(54) **Ventilantrieb**

(71) Anmelder: SIEMENS AKTIENGESELLSCHAFT, 80333 München (DE)
(72) Erfinder: Hartmann, Matthias, 02828 Görlitz (DE); Jüttner, Gerald, 02828 Görlitz (DE)

(57) **Zusammenfassung**

Die Erfindung betrifft einen Ventilantrieb (1), insbesondere für ein Regelventil und/oder Schnellschlussventil einer Dampfturbine, mit einem Antrieb (2) und einem Übertragungselement (3), das Bewegungen des Antriebs (2) auf einen Absperrkörper (5) eines Ventils (6) überträgt. Derartige Anordnungen werden im Stand der Technik äußerst aufwendig mit mehreren Dämpfern gedämpft, die in ihrer Gesamtheit zu einer ungünstigen Versagenswahrscheinlichkeit beitragen. Zur Erhöhung der Verfügbarkeit schlägt die Erfindung vor, dass ein erster Dämpfer (8) derart ausgebildet ist, dass er das Übertragungselement (3) in Umfangsrichtung zur Längsachse (4) umgibt.

## Beschreibung

Die Erfindung betrifft einen Ventilantrieb, insbesondere für ein Regelventil und/oder Schnellschlussventil, insbesondere für eine Dampfturbine, mit einem Antrieb, mit einem Übertragungselement, das sich entlang einer Längsachse erstreckt, wobei das Übertragungselement translatorische Bewegungen in Richtung der Längsachse auf einen Absperrkörper eines anzutreibenden Ventils überträgt, mit mindestens einem Dämpfer, der die translatorische Bewegung zumindest über einen Teil eines Hubweges dämpft.

Ventile bzw. Ventilantriebe der vorgenannten Art sind bereits bekannt und häufig eingesetzt, insbesondere für Schnellschlussventile von Dampfturbinen. Die Anforderungen an einen Schnellschluss bei einer Dampfturbine liegen bei einer Reaktionszeit von kleiner einer Sekunde beginnend mit der Registrierung einer relevanten Störung und endend mit der vollständigen Absperrung der Dampfzufuhr zu der Turbine. Insbesondere bei den großen Aggregaten, für die die Dampfversorgung bis zu 200 kg/s beträgt, ist die Einhaltung einer solchen Bedingung mit höchsten technischen Anstrengungen verbunden. Hinzukommt, dass die Verfügbarkeit aufgrund der gewaltigen Sicherheitsrelevanz nahezu 100% gewährleistet sein muss.

Ein Ventil der oben genannten Art ist beispielsweise bereits aus der US 6,655,409 B1 bekannt. Aufgrund der hohen Schließgeschwindigkeiten insbesondere von Schnellschlussventilen sind die Absperrorgane und die Ventilsitze meist besonders leistungsfähig beschichtet, beispielsweise mittels Stellit, damit keine Beschädigungen bei der Kollision des Absperrorgans mit dem Ventilsitz an einem der beiden Bauteile stattfinden und die Dichtigkeit des Ventils auch nach mehreren Schließvorgängen erhalten bleibt. Trotz größter Anstrengungen hinsichtlich der Ertüchtigung der Oberflächen der Kollisionspartner ist eine Dämpfung der Schließbewegung in zumindest der Endphase des Hubes kurz vor der Kollision unverzichtbar. Regelmäßig werden hierzu einzelne Dämpfungselemente vorgesehen, die die Bewegung, insbesondere des Übertragungselementes, auf eine akzeptable Geschwindigkeit abbremsen. So ist es beispielsweise bekannt, symmetrisch um das Übertragungselement herum, beispielsweise in 120° Abständen drei einzelne zylindrische Dämpfer vorzusehen. Kommt es zum Versagen eines der Dämpfer, wird die Krafteinleitung der bremsenden Dämpfung auf das Übertragungselement unsymmetrisch und es entstehen ungewollte Drehmomente. Dies führt zu unzulässigen Beanspruchungen des Übertragungselementes und der übrigen intakten Dämpfer, die nach nur wenigen Schließvorgängen in Folge von Überlastung gleichfalls zerstört werden und auszuwechseln sind. Dementsprechend ist die erforderliche hohe Verfügbarkeit eines derartigen Ventils in Folge der herkömmlichen Ausbildung der Dämpfer gefährdet.

Die Erfindung hat es sich daher zur Aufgabe gemacht, die Verfügbarkeit eines Ventilantriebes der eingangs genannten Art zu erhöhen ohne zusätzlichen konstruktiven Aufwand und ohne weitere Kosten.

Zur Lösung der erfindungsgemäßen Aufgabe wird vorgeschlagen einen eingangs genannten Ventilantrieb mit einem ersten Dämpfer auszustatten, der derart ausgebildet ist, dass er das Übertragungselement in Umfangsrichtung zur Längsachse umgibt. Die rückbezogenen Unteransprüche beinhalten vorteilhafte Weiterbildungen der Erfindung.

Ein Ventilantrieb der eingangs genannten Art ist regelmäßig Teil eines Ventils, insbesondere für eine Dampfturbine. Der-Absperrkörper des Ventils wirkt hierbei mit einem Ventilsitz zusammen in der Weise, dass der Absperrkörper den lichten Querschnitt des Ventilsitzes in einer geschlossenen Stellung für das strömende Fluid, insbesondere für Dampf, versperrt. Unter einer Dämpfung ist eine Verminderung kinetischer Energie, in diesem Fall der kinetischen Energie der Schließbewegung entlang des Hubweges des Übertragungselementes bzw. des Absperrkörpers des Ventils zu verstehen, wobei insbesondere die kinetische Energie der Schließbewegung des Übertragungselementes und des Absperrkörpers und sonstiger verbundener Bauteile zu verstehen ist. Die Verminderung der kinetischen Energie erfolgt bevorzugt durch Reibung, insbesondere durch Reibungsvorgänge in einer Flüssigkeit bzw. einem Dämpfungsfluid von hinreichender Viskosität. Als Dämpfungsfluid werden bevorzugt Öle eingesetzt. Ein wesentlicher Gedanke der Erfindung liegt darin, dass ein einzelner Dämpfer bzw. der erste Dämpfer das Übertragungselement in Umfangsrichtung zur Längsachse umgibt und damit als ein einzelner Dämpfer symmetrisch über den Umfang in das Übertragungselement entsprechende Kräfte aus der Dämpfung einleitet. Auf diese Weise werden Biegemomente in dem Übertragungselement verursacht, durch die Dämpfung vermieden. Der Einsatz eines einzelnen Dämpfers statt einer Vielzahl von Dämpfern führt zu einer höheren Verfügbarkeit, da mit der Annahme gleicher Verfügbarkeiten der Einzelaggregate die Versagenswahrscheinlichkeit der Dämpfung des Ventilsantriebs auf einen Bruchteil der ursprünglichen Versagenswahrscheinlichkeit entsprechend der Anzahl der Dämpfungselemente bei einer herkömmlichen Anordnung reduziert wird. Beispielsweise ist die Verfügbarkeit der Dämpfung der erfindungsgemäßen Anordnung gegenüber einer Dämpfung mit drei Einzeldämpfern verdreifacht.

Insbesondere bei einer Ausbildung des erfindungsgemäßen Ventilantriebes als Antrieb eines Schnellschlussventils ist es zweckmäßig, wenn der Antrieb einen ersten Antrieb und einen zweiten Antrieb-umfasst, wobei der zweite Antrieb schneller ist als der erste. Auch bei einer Kombination einer Schnellschlussfunktion mit einer Regelfunktion kann vorteilhafter Weise zum Regeln der Öffnungsstellung der erste Antrieb verwendet werden und nur im Schnellschlussfall der zweite Antrieb, der naturgemäß in Folge der höheren Schließgeschwindigkeit eine größere Belastung der verwendeten Werkstoffe verursacht. Regelmäßig werden die Schnellschlussventile insbesondere bei Dampfturbinen auch zum Absperren der Dampfzufuhr im Normalfall benutzt, wobei der langsamere erste Antrieb zum Einsatz kommt.

Zweckmäßig umfasst der zweite Antrieb einen Kraftspeicher der die translatorische Bewegung entlang eines Hubweges in Schließrichtung antreibt und der von dem ersten Antrieb aufgeladen wird. Dieser Kraftspeicher kann als elastisches Element, insbesondere als eine Feder und bevorzugt als eine Spiralfeder ausgebildet sein. Vorteilhafter Weise erstreckt sich der erste Dämpfer entlang einer ersten Achse, die koaxial zu der Längsachse des Übertragungselements angeordnet ist. Auf diese Weise ist insbesondere eine symmetrische Krafteinleitung der Dämpfungskraft in das Übertragungselement gewährleistet.

Zweckmäßig weist der Dämpfer ein Dämpfungsfluid auf, welches in einem Fluidraum angeordnet ist. Die Verwendung eines Fluides zur Erzeugung der Reibung zum Zwecke der Dämpfung ist besonders verschleißarm, so dass eine hohe Anzahl an Lastzyklen bewerkstelligt werden kann, bevor entsprechende Wartungsarbeiten erfolgen müssen. Sinnvoll ist der Fluidraum von einem Gehäuse umgeben, welches sich bevorzugt konzentrisch um das Übertragungselement erstreckt.

Eine vorteilhafte Ausgestaltung der Erfindung sieht vor, dass das Übertragungselement mit einem Verdrängungsformstück kraftübertragend und bewegungsübertragend verbunden ist, welches sich bei Bewegung des Übertragungselements in eine mit Dämpfungsfluid gefüllte Fluidkammer im Fluidraum bewegt, wobei das Verdrängungselement mit Wänden des Fluidraums - Dämpfungsfluid in einem Dämpfungsvolumen einschließt, wobei das Dämpfungsvolumen bei Bewegung in Schließrichtung sich verkleinert, so dass das Dämpfungsfluid durch eine Passage gepresst wird. Vorteilhaft ermöglicht diese Ausgestaltung eine einfache Dimensionierung und Dosierung der Dämpfungsfunktion durch zweckmäßige Auslegung des lichten Querschnitts der Passage. Die Passage kann hierbei verschiedene Formen annehmen und muss nicht durch einen einzelnen Kanal repräsentiert sein, sondern kann vielmehr mehrere unabhängig voneinander durchflossene Kanäle aufweisen. Die Passage kann als eine oder mehrere Löcher in den Wänden der Fluidkammer oder dem Verdrängungsformstück ausgebildet sein. Besonders zweckmäßig ist die Passage als einen Spalt oder mehrere Spalte zwischen den Wänden der Fluidkammer und dem Verdrängungsformstück ausgebildet. Das Verdrängungsformstück kann beispielsweise eine im wesentlichen runde Außenkontur aufweisen und in eine korrespondierende runde Ausnehmung der Fluidkammer eintauchen, wobei es sich bei dem Verhältnis dieser beiden Formen um eine Spielpassung handelt, die entsprechend dem gewünschten Dämpfungseffekt dimensioniert ist. Die Auslegung dieser Passung kann über den Hubweg des Übertragungselementes und dementsprechend über den zurückgelegten Weg des Verdrängungsformstücks unterschiedlich ausgebildet sein, so dass beispielsweise sich die Passage mit fortschreitender Bewegung in Schließrichtung verengt. So kann die Dämpfungskraft zunächst geringer ausfallen und sich langsam erhöhen unter Berücksichtigung der unterschiedlichen Bewegungsgeschwindigkeiten in den verschiedenen Bewegungsphasen. Sämtliche dieser Gestaltungsmöglichkeiten werden im Wesentlichen durch die Verwendung des erfindungsgemäßen ersten Dämpfers, der das Übertragungselement in Umfangsrichtung zur Längsachse umgibt ermöglicht, da eine Abstimmung von mehreren Dämpfern in dieser Weise eine äußerst aufwendige Fertigung erfordern würde. Zweckmäßig ist das Verdrängungsformstück oder die Fluidkammer mit einem Rückschlagventil versehen, das bei Vergrößerung des Dämpfungsvolumens öffnet und bei Verkleinerung schließt. So ist gewährleistet, dass die Dämpfung nur in einer Bewegungsrichtung des Ventils bzw. des Absperrorgans, bevorzugt in Richtung des Schließens, erfolgt und die umgekehrte Bewegungsrichtung zweckmäßig ungedämpft ist.

Damit die Krafteinleitung über das Verdrängungsformstück in das Übertragungselement symmetrisch erfolgt, ist es zweckmäßig, wenn das Verdrängungsformstück konzentrisch zu dem Übertragungselement ausgebildet ist. Auch ist eine konzentrische Ausbildung der Fluidkammer zu diesem Zweck hinsichtlich des Übertragungselementes sinnvoll.

In der Folge ist die Erfindung anhand eines speziellen Ausführungsbeispiels unter Bezugnahme auf eine Zeichnung näher beschrieben.

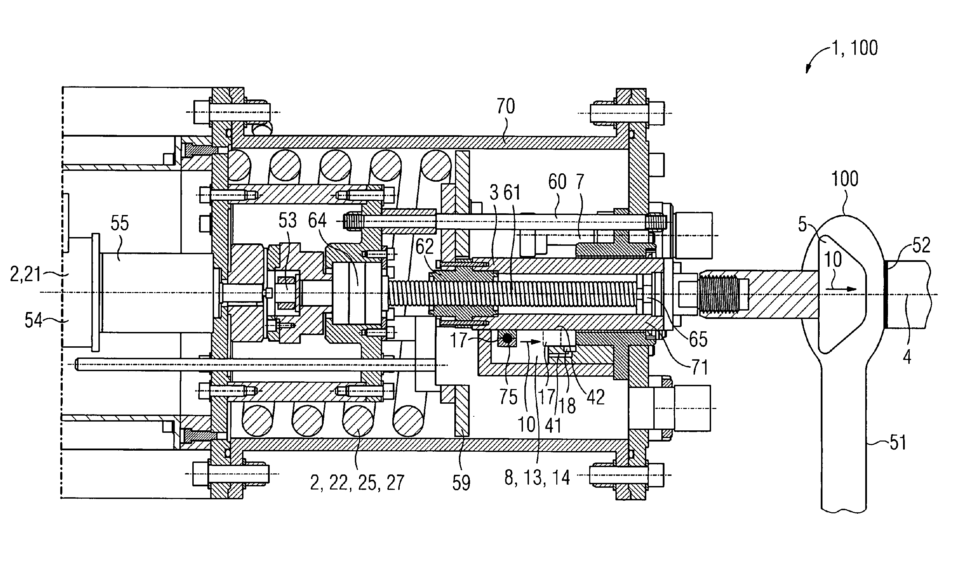

Figur 1 zeigt eine Darstellung eines Ventilantriebs im Längsschnitt, wobei der obere Bereich eine herkömmliche Dämpfung eines Ventilantriebes und der untere Bereich der Darstellung eine erfindungsgemäße Dämpfung zeigt.

Figur 1 zeigt ein Ventilantrieb 1 in einem Längsschnitt, wobei eine mittige Symmetrieachse eine obere Hälfte des Ventilantriebes mit der Darstellung einer herkömmlichen Anordnung von einem unteren Teil des Ventilantriebes mit einer Darstellung der erfindungsgemäßen Anordnung trennt. Angedeutet sind außerdem der von dem Ventilantrieb 1 bewegte Absperrkörper 5 in einem Dampfpfad 51 und ein Ventilsitz 52 eines Ventils 100.

Wesentliche Funktionsbauteile des Ventils 100 bzw. Ventilantriebs 1 sind der Antrieb 2 bestehend aus einem ersten Antrieb 21 und einem zweiten Antrieb 22, ein Übertragungselement 3, das die Bewegung von dem Antrieb 2 auf den Absperrkörper 5 überträgt, eine Kupplung 53 und Dämpfer 7 bzw. ein erster Dämpfer 8.

Der Antrieb 2 besteht aus einem ersten Antrieb 21 und einem zweiten Antrieb 22. Der erste Antrieb 21 weist einen Motor 54 und ein Schneckengetriebe 55 auf, welches Schneckengetriebe 55, das selbsthemmend ausgebildet ist, eine Drehung mittels der Kupplung 53 auf eine Spindel 61 des Übertragungselementes 3 überträgt. Der zweite Antrieb 22 ist als Kraftspeicher 25 bzw. Feder 27 ausgebildet und wird von dem ersten Antrieb 21 aufgeladen bzw. gespannt. Wird die Kupplung 53 getrennt, entlädt sich der Kraftspeicher 25 bzw. entspannt sich die Feder 27 und das Übertragungselement 3 bewegt sich in eine Schließrichtung 10. Hierbei wirkt die Feder 27 gegen eine Anlagefläche 59, die mit dem Übertragungselement 3 verbunden ist. Die Anlagefläche ist in ihrer translatorischen Bewegung mittels Führungselementen 60 geführt.

Trennt die Kupplung 53 den Kraftfluss zwischen Antrieb 1 und Antrieb 2, drückt die Feder 27 die Anlagefläche 59 in Schließrichtung 10 und die Spindel 61 dreht sich in einer mit der Anlagefläche 59 fest verbundenen Mutter 62. Schließt die Kupplung 53 kann der erste Antrieb 54 über das Schneckengetriebe 55 eine translatorische Bewegung in entgegen der Schließrichtung 10 - also in eine Öffnungsrichtung erzeugen. Daneben kann der erste Antrieb 54 die Feder 27 wieder spannen über Drehung der Spindel 61 mittels der Kupplung 53.

Die Spindel 61 ist an beiden Enden gelagert, in einem ersten Lager 64 und einem zweiten Lager 65. Das erste Lager 64 dient auch als Abstützung für axiale Kräfte. Das Übertragungselement 3, die Kupplung 53, die Lager 64, 65, die Feder 27, die Führungselemente 60, die Dämpfer 7 bzw. der erste Dämpfer 8 und die Anlagefläche 59 sind in einem Gehäuse 70 eingeschlossen.

Das Übertragungselement 3 umfasst einen Zylinderkörper 71, der bei der Ausführung gemäß der Erfindung relativ zu einem Fluidraum 14 des ersten Dämpfers 8 beweglich ist. Der Fluidraum 14 ist zumindest teilweise mit einem Dämpfungsfluid 13 gefüllt und weist eine Fluidkammer 18 auf. Bei einer nicht vertikalen Aufstellung des Ventilantriebs 1 ist der Fluidraum 14 bevorzugt nahezu vollständig mit dem Dämpfungsfluid 13 gefüllt. Bei einer vertikalen Aufstellung ist der Fluidraum 14 zumindest soweit gefüllt, dass die Fluidkammer 18 zumindest vollständig mit dem Dämpfungsfluid 13 gefüllt ist.

Der zylindrische Körper 71 des Übertragungselementes 3 ist fest mit einem Verdrängungsformstück 17 verbunden, das sich über den gesamten Umfang hinsichtlich der Längsachse 4 - also 360° um den Zylinder - erstreckt.

Bei Bewegung des Übertragungselementes 3 in Schließrichtung 10 taucht das Verdrängungsformstück 17 in die Fluidkammer 18 ein und die sich in Umfangsrichtung erstreckende Spalte 42 wirken als Passage 14 für das verdrängte Dämpfungsfluid 13 bei fortgesetzter Bewegung in Schließrichtung 10, so dass die Flüssigkeitsreibung des Dämpfungsfluids 18 eine Abbremsung bzw. Dämpfung der Bewegung in Schließrichtung 10 bewirkt. Alternativ zu dem Spalt 42 oder zusätzlich kann die Fluidkammer 18 oder das Verdrängungsformstück 17 mit Löchern 45 bzw. Kanälen als Passage 40 versehen sein. Das Verdrängungsformstück 17 ist mit einem Rückschlagventil 75 versehen, das bei Vergrößerung des Dämpfungsvolumens 31 (eingeschlossenes Volumen von Verdrängungsformstück 17 und Wänden des Fluidraums 14) öffnet und bei Verkleinerung schließt. Auf diese Weise ist nur eine Bewegung des Übertragungselements 3 in Schließrichtung 10 in der Endphase der Schließbewegung gedämpft. Eine umgekehrte Bewegung ist frei. Die Fluidkammer 18, das Verdrängungsformstück 17 und der Fluidraum 14 sind im Wesentlichen konzentrisch zu der Längsachse 4 des Übertragungselementes 3 ausgebildet. Von besonderer Bedeutung ist hierbei die konzentrische bzw. rotationssymmetrische Ausbildung des Verdrängungsformstücks 17 und der Fluidkammer 18, so dass die Einleitung der Dämpfungskraft auf das Übertragungselement 3 im Wesentlichen symmetrisch ist und keine Biegemomente in dem Übertragungselement 3 erzeugt werden.

## Patentansprüche

1. Ventilantrieb (1),
insbesondere für ein Regelventil und/oder Schnellschlussventil, insbesondere für eine Dampfturbine,
mit einem Antrieb (2),
mit einem Übertragungselement (3), das sich entlang einer Längsachse (4) erstreckt, wobei das Übertragungselement (3) translatorische Bewegungen in Richtung der Längsachse (4) auf einen Absperrkörper (5) eines anzutreibenden Ventils (6) überträgt,
mit mindestens einem Dämpfer (7), der die translatorische Bewegung zumindest über einen Teil eines Hubweges (9) dämpft,
**dadurch gekennzeichnet,**
**dass** ein erster Dämpfer (8) derart ausgebildet ist, dass er das Übertragungselement (3) in Umfangsrichtung zur Längsachse (4) umgibt.

2. Ventilantrieb (1) nach Anspruch 1,
**dadurch gekennzeichnet,**
**dass** der Antrieb (2) einen ersten Antrieb (21) und einen zweiten Antrieb (22) umfasst, wobei der zweite Antrieb (22) schneller ist als der erste Antrieb (21).

3. Ventilantrieb (1) nach Anspruch 1 oder 2,
**dadurch gekennzeichnet,**
**dass** der zweite Antrieb (22) einem Kraftspeicher (35) aufweist, der die translatorische Bewegung entlang des Hubweges (9) in Schließrichtung (10) antreibt und von dem ersten Antrieb (21) aufgeladen wird.

4. Ventilantrieb (1) nach Anspruch 1, 2 oder 3,
**dadurch gekennzeichnet,**
**dass** der Kraftspeicher (25) als mindestens eine Feder (27) ausgebildet ist.

5. Ventilantrieb (1) nach Anspruch 1, 2, 3 oder 4,
**dadurch gekennzeichnet,**
**dass** der erste Dämpfer (8) sich entlang einer ersten Achse (11) erstreckt, die koaxial zu der Längsachse (4) des Übertragungselements (3) angeordnet ist.

6. Ventilantrieb (1) nach einem der vorhergehenden Ansprüche,
**dadurch gekennzeichnet,**
**dass** der erste Dämpfer (8) im Wesentlichen symmetrisch zu der ersten Achse (11) ausgebildet ist.

7. Ventilantrieb (1) nach einem der vorhergehenden Ansprüche,
**dadurch gekennzeichnet,**
**dass** der erste Dämpfer (8) ein Dämpfungsfluid (19) aufweist, welches in einem Fluidraum (14) angeordnet ist.

8. Ventilantrieb (1) nach einem der vorhergehenden Ansprüche,
**dadurch gekennzeichnet,**
**dass** der Fluidraum (14) von einem Gehäuse (15) umgeben ist, welches sich konzentrisch um das Übertragungselement (3) erstreckt.

9. Ventilantrieb (1) nach einem der vorhergehenden Ansprüche,
**dadurch gekennzeichnet,**
**dass** das Übertragungselement (3) mit einem Verdrängungsformstück (17) kraftübertragend und bewegungsübertragend verbunden ist, welches sich bei Bewegung des Übertragungselements (3) in eine mit Dämpfungsfluid (13) gefüllte Fluidkammer (18) im Fluidraum (14) bewegt, wobei das Verdrängungsformstück (17) mit Wänden (30) des Fluidraums (14) Dämpfungsfluid (13) in einem Dämpfungsvolumen (31) einschließt, wobei das Dämpfungsvolumen (31) bei Bewegung in Schließrichtung (10) sich verkleinert, so dass das Dämpfungsfluid (13) durch eine Passage (40) gepresst wird.

10. Ventilantrieb (1) nach Anspruch 9,
**dadurch gekennzeichnet,**
**dass** die Passage (40) als ein Loch (41) oder mehrere Löcher (41) in den Wänden der Fluidkammer (18) ausgebildet ist.

11. Ventilantrieb (1) nach einem der Ansprüche 9 oder 10,
**dadurch gekennzeichnet,**
**dass** die Passage (40) als ein Spalt (42) oder als mehrere Spalte (42) zwischen den Wänden (30) der Fluidkammer (18) und dem Verdrängungsformstück (17) ausgebildet ist.

12. Ventilantrieb (1) nach einem der Ansprüche 9, 10 oder 11,
**dadurch gekennzeichnet,**
**dass** die Passage (40) als ein zweites Loch (45) oder als mehrere zweite Löcher (45) in dem Verdrängungsformstück (17) ausgebildet ist. -

13. Ventilantrieb (1) nach einem der vorhergehenden Ansprüche 9 bis 12,
**dadurch gekennzeichnet,**
**dass** das Verdrängungsformstück (17) oder die Fluidkammer mit einem Rückschlagventil (75) versehen ist, das bei Vergrößerung des Dämpfungsvolumens öffnet und bei Verkleinerung schließt.

14. Ventilantrieb (1) nach mindestens einem der vorhergehenden Ansprüche 9 bis 13,
**dadurch gekennzeichnet,**
**dass** das Verdrängungsformstück (17) konzentrisch zu dem Übertragungselement (3) ausgebildet ist.

15. Ventilantrieb (1) nach mindestens einem der vorhergehenden Ansprüche 9 bis 14,
**dadurch gekennzeichnet,**
**dass** die Fluidkammer (18) konzentrisch zu dem Übertragungselement (3) ausgebildet ist.
